# FASCICULE DE BREVET EUROPEEN

(11) **EP 0 614 781 B1**
(45) Date de publication et mention de la délivrance du brevet: **15.10.1997**
(21) Numéro de dépôt: 94400474.6
(22) Date de dépôt: 04.03.1994
(51) Int. Cl.: B60N 2/36, B60N 2/08

(54) **Siège pour automobile et son application à un siège arrière**
Fahrzeugsitz und dessen Anwendung bei einem Rücksitz
Vehicle seat and its application to a rear seat

(30) Priorité: 08.03.1993 FR 9302658
(43) Date de publication de la demande: 14.09.1994
(73) Titulaire: CESA COMPAGNIE EUROPEENNE DE SIEGES POUR AUTOMOBILES, 92307 Levallois-Perret Cédex (FR); Société Anonyme dite: REGIE NATIONALE DES USINES RENAULT, 92109 Boulogne Billancourt (FR)
(72) Inventeur: Colin, Jacques, F-45700 Montcresson (FR); Guerlin, Philippe, F-91080 Courcouronnes (FR); Roman, Serge, F-45200 Montargis (FR)
(74) Mandataire: Polus, Camille

(56) Documents cités:
- EP-A- 0 457 699
- EP-A- 0 558 380
- WO-A-83/03081
- FR-A- 2 449 552
- US-A- 4 949 931
- US-A- 5 158 338

## Description

La présente invention concerne les sièges pour véhicules automobiles terrestres et, plus particulièrement, les sièges réglables et basculables destinés à être montés sur le plancher du véhicule.

Comme on le sait, les sièges pour véhicules automobiles terrestres se composent notamment d'une assise à laquelle est associé un dossier. La construction d'un tel siège est telle que, le plus souvent, le dossier est inclinable relativement à l'assise voire rabattable contre cette dernière, selon une direction orthogonale à l'axe longitudinal du véhicule. De plus, le siège dans son ensemble est le plus souvent réglable en translation selon une direction parallèle à l'axe longitudinal du véhicule et en outre, s'il y a lieu, ce siège dans son exemple, habituellement après rabattement du dossier contre son assise, est aussi basculable selon une direction qui est orthogonale à l'axe longitudinal du véhicule. Une telle configuration est adoptée parfois pour les sièges avant en particulier pour les véhicules dits coupés afin de faciliter l'accès aux places des sièges arrière ou bien aussi pour les sièges arrière afin de dégager un complément de volume permettant de charger des objets encombrants. C'est le cas par exemple des véhicules dits trois portes ou cinq portes qui permettent de transformer un véhicule dit de "tourisme ou conduite intérieure" en "break".

Dans le cas des sièges arrière, qu'ils se présentent sous la forme de sièges individuels ou d'une banquette multiplace, la situation se complique du fait de la présence des ceintures de sécurité dont l'un des constituants de la boucle se trouve amarré au plancher pratiquement dans l'axe longitudinal médian du véhicule. En effet, dans ce cas il faut que l'amarrage au plancher de la boucle de la ceinture de sécurité puisse, à la fois, s'adapter aux diverses positions longitudinales en translation du siège et aussi permettre le basculement du siège complet après rabattement du dossier contre l'assise.

WO 83/03081 décrit un siège du type réglable et basculable, destiné à être monté sur le plancher d'un véhicule automobile terrestre.

EP-A-0 558 380, qui est compris dans l'état de la technique au sens de l'article 54(3) CBE, décrit un siège du type précité comprenant une serrure composite articulée qui permet de satisfaire à l'essentiel des contraintes contradictoires imposées précisées ci-dessus. La solution décrite par ce document permet, en outre, une adaptation automatique à l'intervalle des écarts dûs aux tolérances de fabrication notamment du plancher d'un véhicule.

Toutefois, une difficulté subsiste encore lorsqu'après avoir été basculé en totalité pour gagner de la place, un siège arrière est redéployé en position "route" apte à être occupé par un occupant et repose en principe contre le plancher du véhicule. En effet, lorsqu'un utilisateur saisit le siège pour le faire basculer en position d'utilisation ou "route" depuis l'arrière du véhicule non seulement il fait décrire un arc de cercle à l'assise contre laquelle est replié le dossier mais il tend aussi à modifier la position longitudinale en translation de l'ensemble du siège relativement au plancher. Dans une telle situation, du fait notamment que la rigidité de l'assise, et en particulier de son armature mécano-soudée, n'est pas absolument parfaite, celle-ci tend à prendre du gauche aussi bien dans son plan en se transformant approximativement en parallélogramme que dans l'espace en se transformant "en hélice d'avion", l'un des côtés de l'armature portant par exemple contre un appui du plancher qui n'est pas le symétrique de l'appui du côté opposé. Dans un tel cas, le siège repose de guingois sur le plancher, et si un occupant y prend place et boucle sa ceinture de sécurité il peut se faire que la serrure à laquelle l'un des constituants de la boucle est ancré ne soit pas réellement et efficacement amarrée au plancher, le siège "boîtant" sur ce dernier. On imagine facilement que si dans une telle situation une brusque décélération survient, que ce soit par suite d'un freinage brutal ou d'un choc violent, le passager qui se croyait protégé n'est plus retenu par sa ceinture de sécurité et est projeté vers l'avant du véhicule.

Une situation similaire peut aussi se produire sans que l'assise se gauchisse réellement si l'armature, bien qu'en appui symétrique, ne repose pas réellement sur les parties qui lui sont assignées du plancher mais en demeure insidieusement à distance sans que cela soit réellement perceptible.

Le but de l'invention est de remédier à ce type d'inconvénient nuisible à la sécurité à l'aide d'un siège perfectionné, réglable et basculable, destiné à être monté sur le plancher d'un véhicule automobile terrestre.

A cet effet, l'invention a pour objet un siège du type réglable et basculable, destiné à être monté sur le plancher d'un véhicule automobile terrestre, comprenant une assise réglable en translation selon une direction parallèle à l'axe longitudinal du véhicule avec une course limitée par deux positions d'extrémités et basculable en rotation selon une direction orthogonale à cet axe longitudinal, un dossier porté par l'assise et rabattable sur cette dernière par rotation selon une direction orthogonale à cet axe longitudinal, au moins un montage avec, d'une part, une glissière permettant cette translation et faite d'un élément mobile solidaire de l'assise et d'un élément semi-fixe coopérant avec l'élément mobile et destiné à être relié au plancher et avec, d'autre part, une articulation permettant ce basculement et reliant cet élément semi-fixe au plancher, un verrou pour maintenir normalement immobilisés relativement l'un à l'autre les éléments de la glissière sous l'action d'une sollicitation élastique, une serrure pour normalement interdire ce basculement, qui est faite d'une gâche solidaire du plancher et d'un pêne articulé coopérant avec cette gâche pour s'y fixer automatiquement sous l'action d'une sollicitation élastique et qui sert à l'ancrage d'au moins une boucle de ceinture de sécurité pour son amarrage au plancher, une commande pour agir sur ces verrou et serrure à l'encontre de leurs sollicitations élastiques particulières afin de permettre à volonté ces translation et/ou basculement, et un dispositif de sûreté suppléant temporairement le verrou auquel il se substitue momentanément, ce dispositif de sûreté comprenant, d'une part, porté par l'assise un corps délimitant un logement pour une pince et pour un taquet mobile entre une première position active où il immobilise et condamne la glissière lorsque le siège occupe l'une des extrémités de sa course de translation et une seconde position inactive où il laisse libre la glissière, lorsque le siège n'occupe pas cette extrémité de sa translation, et, d'autre part, porté par le plancher un pontet destiné à coopérer avec cette pince et ce taquet.

Un tel siège est aussi remarquable en ce qu'il comprend, s'il y a lieu et de préférence, une sécurité faite de deux parties coopérantes à profils conjugués l'une mobile solidaire de l'assise et l'autre fixe solidaire du plancher et agencées pour autoriser seulement lorsque le siège est à cette extrémité de sa course de translation soit le basculement du siège dans un sens après séparation du pêne d'avec la gâche soit la fixation du pêne à la gâche après basculement du siège dans le sens opposé.

L'invention a aussi pour objet l'application d'un tel siège perfectionné à un siège arrière mono ou multiplace.

D'autres caractéristiques de l'invention ressortiront de la lecture de la description et des revendications qui suivent ainsi que de l'examen du dessin annexé, donné seulement à titre d'exemple, où :
- la Figure 1 est une vue perspective schématique d'un mode de réalisation d'un siège perfectionné selon l'invention;

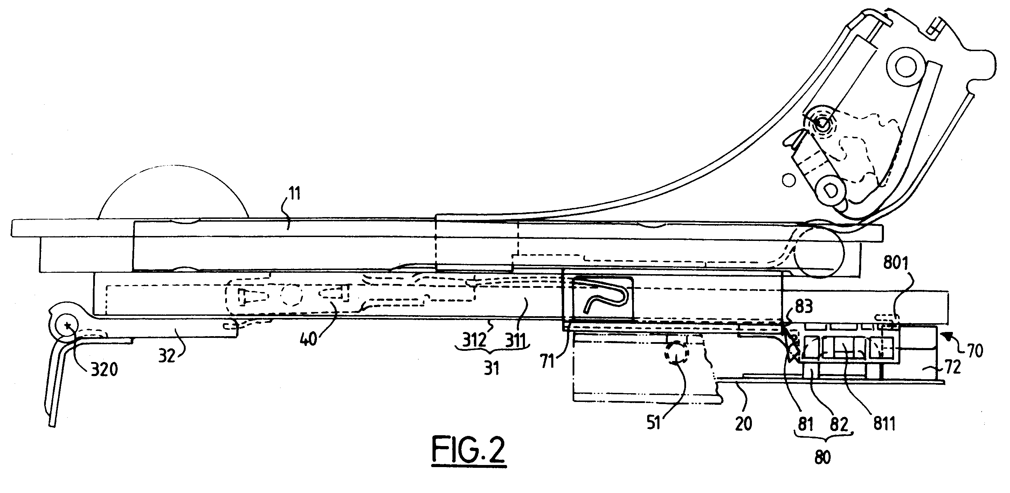

- la Figure 2 est une vue partielle schématique, en élévation latérale, du siège de la Figure 1;
- la Figure 3 est une vue analogue à celle de la Figure 2, partiellement en coupe selon un plan longitudinal médian vertical;
- la Figure 4 est une vue de détail d'un constituant d'un dispositif de sûreté d'un siège selon l'invention;
- la Figure 5 est une vue de détail, partielle d'autres constituants de la sécurité et du dispositif de sûreté d'un siège selon l'invention; et

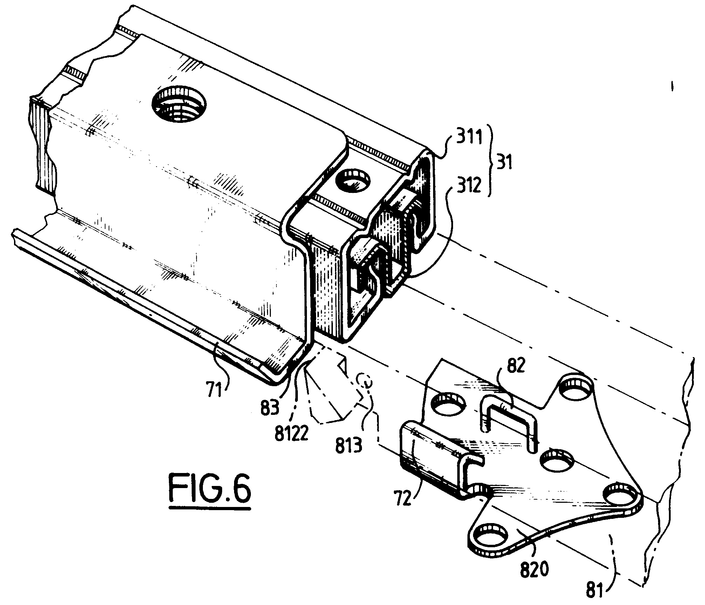

- la Figure 6 est une vue de détail, partielle montrant la sécurité et le dispositif de sûreté.

Les sièges pour véhicules et tout spécialement pour véhicules automobiles terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue, quel que soit le mode de réalisation ou sa variante d'exécution.

Pour la commodité de l'exposé, on décrira successivement chacun des constituants d'un siège perfectionné selon l'invention avant d'en indiquer la fabrication au besoin, et le fonctionnement.

Dans la suite, on décrit un siège perfectionné réglable et basculable selon l'invention dans son application spécifique à un siège arrière dont l'assise est faite d'une banquette à deux places et dont le dossier est fait de deux dossiers indépendants éventuellement réglables en inclinaison et/ou séparément rabattables l'un de l'autre sur l'assise.

Comme on le voit, un siège 10 perfectionné réglable et basculable selon l'invention comprend une assise 11 et un dossier 12 destinés à être montés sur un plancher 20 d'un véhicule, un montage 30, un verrou 40, une serrure 50, une commande 60, de préférence une sécurité 70 et un dispositif de sûreté 80.

L'assise 11, faite d'une armature le plus souvent mécano-soudée de tout type classique comme illustré par exemple, est destinée à porter un coussin non représenté. Cette assise est réglable en translation selon une direction parallèle à l'axe X longitudinal du véhicule avec une course limitée par deux positions extrêmes. Cette assise est aussi basculable en rotation selon une direction Y orthogonale à cet axe longitudinal X comme illustré. Le dossier 12 à inclinaison réglable s'il y a lieu, est porté par l'assise et est rabattable sur cette dernière par rotation selon une direction orthogonale à l'axe longitudinal X. Ce dossier est fait d'une armature habituellement mécano-soudée comme illustré de tout type classique, qui est destinée à porter un coussin non illustré. La direction de rabattement est définie par une articulation de tout type approprié classique, d'axe 100.

Ce siège est destiné à être monté sur le plancher 20 ou similaire d'un véhicule automobile qui présente une surface d'appui 21. Pour ce faire, on utilise le montage 30 qui comprend, d'une part, au moins une glissière 31 permettant la translation parallèlement à l'axe X. Cette glissière 31 comprend un élément 311 mobile solidaire de l'assise 11, et un élément 312 semi-fixe coopérant avec l'élément mobile 311 et destiné à être relié au plancher 20. Les glissières de ce type sont bien connues dans la technique et l'on ne s'y étendra pas davantage. Le montage 30 comprend aussi une articulation 32 telle une charnière ou analogue d'axe 320 permettant le basculement selon une direction orthogonale à l'axe X. Cette charnière relie l'élément semi-fixe 312 au plancher 20. Cette charnière, de tout type approprié classique, est clairement représentée sur les figures du dessin. Habituellement on utilise au moins deux glissières et deux charnières, une à droite et une à gauche du siège.

Le verrou 40 maintient normalement immobilisés relativement l'un à l'autre les éléments 311 et 312 de la glissière 31 sous l'action d'une sollicitation élastique appropriée. Ce verrou est par exemple fait de dents et de crans s'engageant les uns dans les autres, comme il est connu. Pour permettre un réglage en translation de l'ensemble du siège par rapport au plancher on agit à l'encontre de la sollicitation élastique exercée par exemple par une lame ressort ou similaire afin de neutraliser le verrou, par exemple par dégagement des dents d'avec les crans et ainsi pouvoir faire coulisser le siège dans la position souhaitée, par exemple pour gagner du volume de rangement à l'arrière du dossier au détriment de la place disponible pour les jambes des passagers qui occupent les sièges arrière ou inversement. Ceci est classique.

La serrure 50 qui sert à l'ancrage d'au moins une boucle de ceinture de sécurité et à son amarrage au plancher interdit aussi, normalement, le basculement du siège et tout spécialement de l'assise par rotation selon la charnière, de préférence après rabattement du ou des dossiers contre l'assise. Cette serrure comprend une gâche 51 solidaire du plancher et faite, par exemple, d'au moins un barreau transversal, et un pêne 52 composite articulé avec un coffre à débattement pourvu d'un crochet mobile. Le pêne 52 est destiné à coopérer avec la gâche 51 et à s'y fixer automatiquement sous l'action d'une sollicitation élastique tout en pouvant à volonté s'en séparer pour permettre le basculement du siège. Une tige 53 ou similaire permet l'ancrage d'au moins une boucle de ceinture de sécurité par l'intermédiaire du pédoncule ou similaire de cette dernière, comme il est classique. Cette serrure est par exemple du type de celle décrite dans le document cité précédemment auquel on pourra utilement se reporter pour plus ample information.

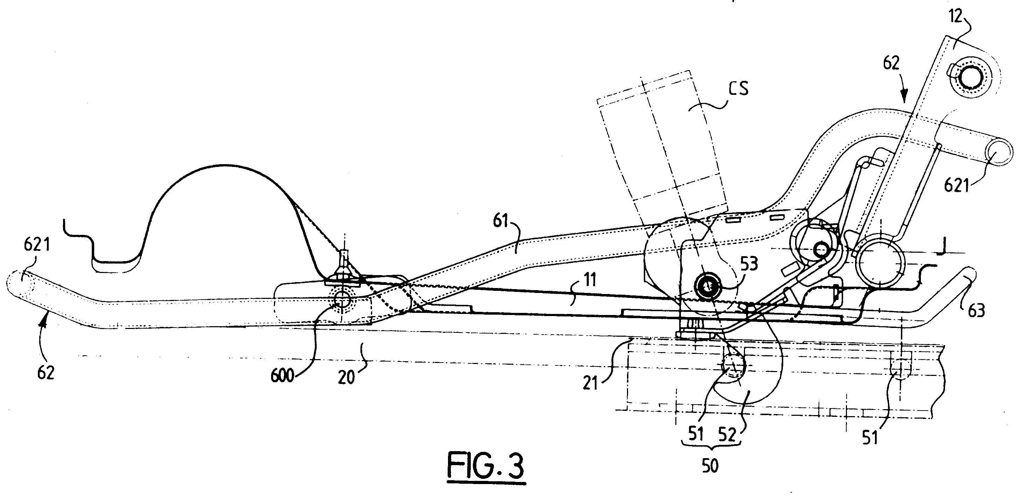

La commande 60 permet d'agir sur le verrou 40 et/ou la serrure 50 à l'encontre de leurs sollicitations élastiques particulières afin de permettre, à volonté, d'opérer le réglage en translation et/ou autoriser le basculement. Cette commande se présente par exemple à la manière d'une barre 61 apte à basculer relativement au plancher selon un axe 600 qui est orthogonal à l'axe X et est situé entre ses extrémités 62. Chacune de ces extrémités 62 qui sont situées de part et d'autre de l'assise, comme illustré, sont munies d'une poignée 621 ou similaire. Pour les raisons que l'on comprendra par la suite, une contre-poignée 63 est parfois située à proximité de la poignée 621 située à l'arrière de l'assise, comme illustré. L'écartement normal de la contre-poignée 63 et de la poignée 621 est tel qu'on peut les saisir simultanément d'une seule main pour les rapprocher l'une de l'autre, comme on le comprendra par la suite. Tout ceci apparaît clairement notamment sur la Figure 3.

La sécurité 70 facultative comprend deux parties 71, 72 coopérantes à profils conjugués. Une 71 de ces parties est solidaire de l'assise 11 et est donc mobile avec cette dernière. Une autre 72 de ces parties est solidaire du plancher 20 et est donc fixe. La partie mobile 71 a par exemple un profil en J et la partie fixe 72 a un profil en J inversé. L'agencement de cette sécurité est tel que les deux parties 71, 72 ont les arcs de leur J respectif normalement toujours engagés l'un dans l'autre à la manière de deux crochets tête-bêche, sauf à l'une des extrémités de la course de translation du siège et, plus particulièrement, lorsque l'assise et tout ce qu'elle porte sont repoussés le plus en avant possible, repéré par rapport à l'orientation traditionnelle d'un véhicule. Ce n'est que lorsque le siège occupe cette extrémité de sa course, ici "tout à l'avant", que soit le basculement du siège dans un sens après séparation du pêne d'avec la gâche est possible soit, inversement, la fixation du pêne à la gâche après basculement du siège dans le sens opposé est possible. Dans le mode de réalisation illustré, la partie mobile 71 de la sécurité 70 est solidaire de l'élément mobile 311 de la glissière 31 et la partie fixe 72 est solidaire du plancher 20, directement ou indirectement.

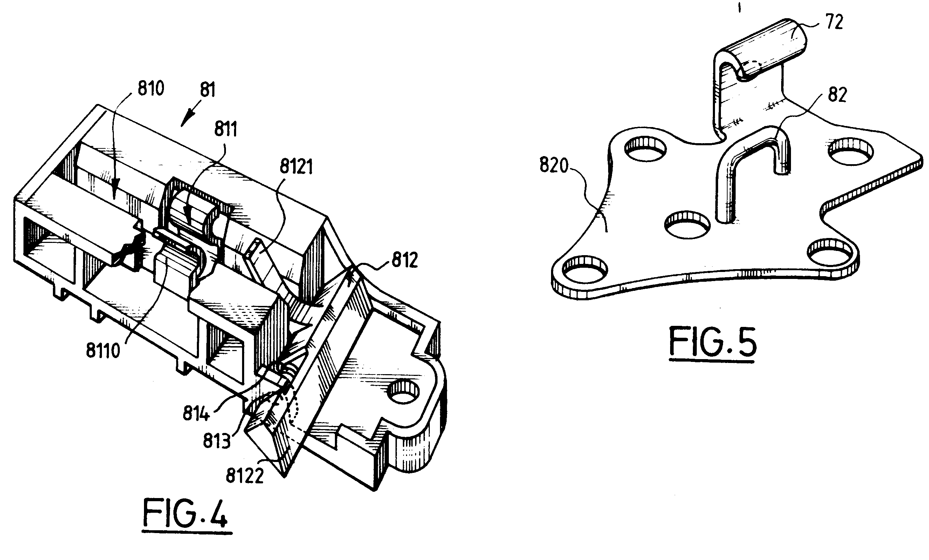

Le dispositif de sûreté 80, comme on le comprendra par la suite, supplée temporairement le verrou 40 auquel il se substitue momentanément. Ce dispositif est agencé de manière à soit, dans une première position active, immobiliser et condamner la glissière 31 lorsque le siège occupe cette extrémité de sa course de translation tout en autorisant son basculement, soit, dans une seconde position inactive, laisser libre la glissière 31 lorsque le siège n'occupe pas cette extrémité de sa course de translation, son basculement étant alors s'il y a lieu interdit par la sécurité 70. Le dispositif de sécurité 80 comprend un corps 81 porté directement ou non par l'assise 11, et un pontet 82 solidaire directement ou non du plancher 20. Le corps 81 délimite un logement 810 pour une pince 811. Cette pince 811 présente, de préférence, deux branches 8110 élastiques en forme de lyre. Le logement 810 est aussi pourvu d'un taquet 812 mobile entre une position active où il immobilise et condamne la glissière 31 et une position inactive où il laisse libre la glissière 31. Le taquet 812 se présente à la manière d'un levier monté basculant sur une goupille 813 ou similaire et est soumis au couple d'un ressort 814 qui tend normalement à le placer dans sa position active. Comme on le voit sur le dessin, le taquet 812 comprend un palpeur 8121 et une butée 8122. Le pontet 82 est destiné à coopérer avec la pince 811 et avec le taquet 812 et, plus particulièrement, son palpeur 8121. La butée 8122 est destinée à coopérer avec un arrêtoir 83 ou analogue solidaire directement ou indirectement de l'assise 11. L'arrêtoir 83 est monté directement sur l'assise ou de préférence indirectement par l'entremise de la glissière 31, notamment sur l'élément mobile 311 de cette dernière. Le pontet 82, par exemple en forme de demi-anneau, est monté sur une platine 820 qui comprend la partie fixe 72 de la sécurité 70, comme illustré par exemple sur la Figure 5. Le corps 81 est de préférence muni d'une patte de fixation 801 recourbée qui est destinée à coopérer avec l'élément semi-fixe 312 de la glissière, ainsi que de trous destinés à recevoir des moyens de fixation tels que des vis ou des rivets.

Pratiquement tous les constituants d'un siège perfectionné selon l'invention sont, par exemple, faits de pièces métalliques mécano-soudées comme il est classique. Le corps et le taquet du dispositif de sûreté sont, par exemple, faits en matériaux synthétiques appropriés telle une résine moulée comme il est classique.

Tous les constituants d'un siège perfectionné selon l'invention sont réunis, assemblés et montés comme cela ressort clairement de l'examen des figures du dessin et des explications qui précédent.

On exposera maintenant le fonctionnement d'un siège perfectionné selon l'invention.

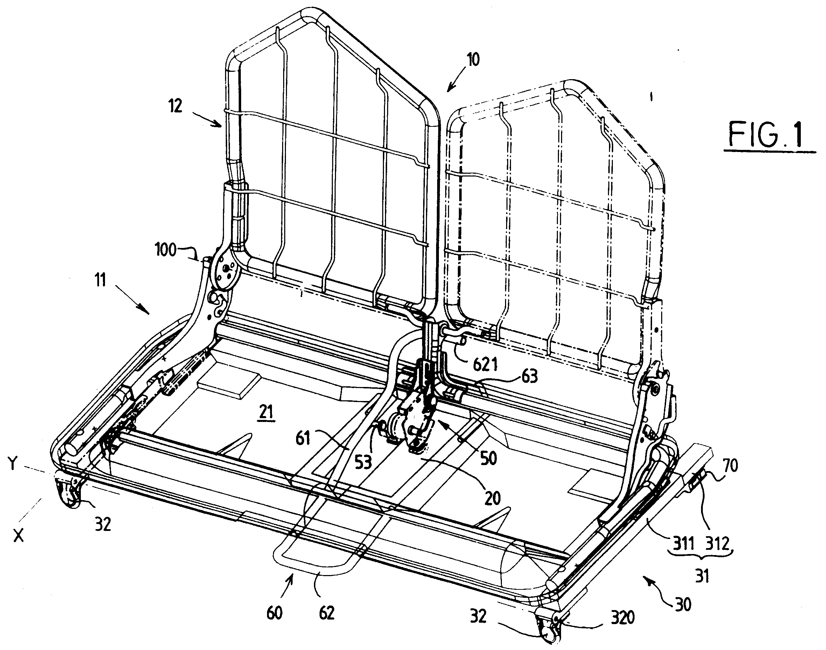

On suppose que le mode de réalisation d'un tel siège est initialement dans la situation où il est illustré sur la Figure 1.

Pour régler en translation la position longitudinale du siège selon une direction parallèle à l'axe longitudinal X du véhicule, on saisit habituellement la poignée située à l'extrémité antérieure de la barre de la commande et on la soulève. En faisant ceci, on agit simultanément sur le verrou qui immobilise normalement les deux éléments de la ou des glissières et aussi sur la serrure qui sert à l'ancrage à la boucle de la ceinture de sécurité pour l'amarrer au plancher. Verrou et serrure sont de la sorte neutralisés à l'encontre de leurs sollicitations élastiques particulières et on peut alors faire coulisser le siège sur ses glissières, vers l'avant ou vers l'arrière, pour le placer dans la position souhaitée. Le blocage du siège dans la nouvelle position recherchée et l'amarrage de la boucle de la ceinture de sécurité se font ensuite, inversement, soit automatiquement soit seulement au relâchement de la poignée. On pourra par exemple se reporter utilement au document FR 2 662 126 qui décrit une solution de ce type.

Si, maintenant, on souhaite basculer l'ensemble du siège, on rabat d'abord, éventuellement après déblocage comme il est classique, le dossier simple ou multiple contre l'assise en le faisant basculer selon l'axe 100. Ceci fait, on saisit habituellement ensemble la poignée et la contre-poignée situées à l'arrière du siège et on les serre simultanément pour les rapprocher l'une de l'autre. Ceci a pour effet de neutraliser simultanément le verrou des glissières et la serrure comme indiqué auparavant. D'un même geste, on peut alors à la fois repousser le siège vers une des extrémités de sa course de translation, de préférence l'extrémité avant, et soulever l'assise avec le dossier rabattu contre elle pour basculer le siège relativement au plancher en le faisant tourner sur sa charnière. Cette opération est possible pour deux raisons. La première c'est que la manoeuvre de la commande a séparé le pêne de la serrure d'avec sa gâche. La seconde, c'est que l'avancée à fond de course du siège a séparé les parties à profils conjugués de la sécurité qui ne sont plus maintenant face à face.

Le choix de l'extrémité avant de la course en translation du siège est de préférence retenu pour des raisons de gain de place et de volume balayé lors du basculement du siège, compte-tenu des dimensions intérieures utiles de l'habitacle du véhicule.

Si on souhaite remettre en place le siège qui a été ainsi replié, il suffit d'opérer en sens inverse.

Normalement il suffit de saisir la contre-poignée et d'exercer sur l'ensemble du siège un mouvement de rotation tendant à le replacer en appui contre le plancher. Cependant, il peut arriver qu'on saisisse simultanément la poignée et la contre-poignée comme indiqué auparavant, et qu'on exerce sur l'ensemble du siège un mouvement combiné de traction et de rotation, généralement depuis l'arrière du véhicule. Comme on se le rappelle, le fait de se saisir de la poignée et de la contre-poignée qui lui fait face, peut neutraliser le verrou des glissières dont l'élément mobile est susceptible de se déplacer par rapport à l'élément semi-fixe. Au cours de cette phase de basculement, les diverses glissières peuvent jouer relativement les unes aux autres, se déplacer et se reverrouiller au hasard et même dans des positions différentes, à droite et à gauche notamment pour les raisons exposées précédemment. En particulier, l'une des glissières peut se reverrouiller en étant demeurée à l'extrémité avant de sa course de translation alors qu'une autre se trouve reverrouillée dans une position qui n'est plus celle de cette extrémité avant de la course de translation. Une situation similaire peut se produire si les deux glissières se reverrouillent dans une position qui n'est pour aucune d'elles cette extrémité avant de la course de translation. En fin de basculement, le siège ne se retrouve plus alors contre le plancher dans ses conditions normales d'appui. En effet, seules les deux parties coopérantes à profils conjugués de la sécurité situées du côté d'une glissière qui est à l'extrémité avant de sa course de translation, peuvent échapper l'une à l'autre alors que ces mêmes parties d'une autre ou des glissières qui sont verrouillées pour une position qui n'est pas cette extrémité avant de la course de translation, butent l'une contre l'autre. Dans le premier cas le siège ou la banquette prend du "gauche" aussi bien dans son plan qu'en hélice d'avion sous son propre poids et ce gauche s'accentue lors de l'occupation du siège. Dans le second cas le siège ou la banquette ne repose pas normalement sur le plancher mais demeure à distance de celui-ci, les parties coopérantes à profils conjugués de la sécurité prenant appui l'une sur l'autre par les arcs de leurs J respectifs. La conséquence de ce gauchissement et/ou de ce faux appui est que le pêne de la serrure risque de ne pas être réenclenché dans la gâche, fixé à cette dernière. La boucle de la ceinture de sécurité ancrée à la gâche n'est donc pas réellement amarrée au plancher. On comprend donc que si dans ces conditions un passager du siège arrière boucle sa ceinture, il croit être réellement protégé en cas de chocs alors qu'il ne s'agit là que d'une apparence trompeuse.

L'invention remédie à ce type de dysfonctionnement.

En effet, lorsque le siège est normalement déployé en position "route", comme illustré sur la Figure 1, le siège dans cette situation repose sur le plancher directement par ses glissières ou indirectement par l'intermédiaire des corps du dispositif de sécurité qui servent d'entretoises, et la pince en forme de lyre située dans le logement se referme élastiquement sur le pontet solidaire du plancher, qu'elle emprisonne. Ceci assure un certain centrage, une mise en place et une petite immobilisation des glissières par rapport au plancher. De même le coffre de la serrure servant à l'ancrage d'une boucle de ceinture de sécurité est arrimé au pêne solidaire du plancher. Toutefois, comme déjà indiqué, on ne peut rabattre le siège que lorsque celui-ci a été préalablement repoussé à fond à l'extrémité avant de sa course de translation. Ceci est dû à la présence de la sécurité dont les deux parties à profils conjugués, l'une liée au plancher et l'autre à l'élément mobile de la glissière, interdisent tout basculement pour une position autre que celle d'extrémité "tout à l'avant". En effet, ces parties qui coulissent réalisent un "crochetage" pour toutes les autres positions en translation du siège autres que la position d'extrémité "tout à l'avant" pour laquelle ces deux parties ne sont plus en vis-à-vis et autorisent le basculement. Ce sont ces parties qui contribuent au dysfonctionnement. En effet, comme on l'a signalé auparavant, les glissières situées de chaque côté sont susceptibles de se dérégler pendant une opération de remise en place en position "route" du siège et alors, les deux parties coopérantes de la ou des glissière(s) qui n'est (ne sont) pas restée(s) dans sa(leur) position d'extrémité "tout à l'avant", butent l'une sur l'autre, la pince solidaire de l'élément semi-fixe de la glissière ne se recentre plus sur son pontet et le pêne de la serrure ne s'amarre plus sur la gâche.

Pour remédier à cet inconvénient rédhibitoire l'invention interdit le déréglage accidentel, pendant la phase de basculement que ce soit pour escamoter le siège ou pour le replacer en position "route", c'est-à-dire aussitôt que les pinces associées aux glissières ont quitté leurs pontets de centrage. Ceci est obtenu grâce au taquet basculant sollicité par son ressort de rappel. Lorsque le siège est en position "route" correcte, comme illustré sur la Figure 1, le palpeur du taquet repose contre le pontet et fait basculer le taquet dans une position escamotée ou inactive. Dans cette position, la butée du taquet n'est pas face à l'arrêtoir solidaire de l'assise et, plus particulièrement, de l'élément mobile de la glissière. On peut alors faire coulisser à volonté par translation le siège pour lui communiquer la position recherchée comme précédemment indiqué. Par contre, si l'on a repoussé le siège à l'extrémité avant de sa course de translation et que simultanément on a commencé à le basculer comme indiqué précédemment, la pince se sépare du pontet et simultanément, le palpeur se sépare de celui-ci : sous l'action du ressort de rappel le taquet bascule et sa butée vient se mettre face à l'arrêtoir. Tout coulissement relatif de l'élément mobile par rapport à l'élément semi-fixe d'une glissière est alors entravé. Le siège est donc immobilisé et condamné en position "tout à l'avant".

Inversement, lorsqu'on veut replacer un siège ainsi basculé en position escamotée, en position "route" la libération des deux éléments de la glissière ne se produit qu'en fin de course de basculement, lorsque le palpeur du taquet prend contact avec le pontet et fait basculer le taquet pour séparer la butée de l'arrêtoir. Cette séparation de la butée et de l'arrêtoir se produit simultanément au centrage qui résulte de la mise en prise de la pince en lyre avec le pontet lui-même.

On est donc assuré que lorsqu'on remet le siège en position "route" les parties à profils conjugués de la sécurité ne buteront pas l'une contre l'autre et, surtout, que le pêne de la serrure sera bien fixé à la gâche pour assurer un amarrage réel au plancher de la ou des boucles de ceinture de sécurité.

Dans le mode de réalisation décrit, on a fait en sorte que l'arrêtoir qui coopère avec la butée escamotable du taquet, soit constitué par le bout 83 ou une partie qui lui en est proche, de l'élément mobile 71 de la sécurité 70. Il est clair qu'on peut utiliser toute autre organe solidaire ou intégré à l'élément mobile de la glissière ou à l'armature de l'assise.

Autrement dit, on voit que l'invention s'applique à deux organes coulissants l'un par rapport à l'autre et dont l'ensemble des deux est monté basculant par rapport à une surface d'appui. L'invention réalise d'une manière extrêmement simple le blocage de ces deux organes l'un par rapport à l'autre dans une position donnée unique et cela immédiatement aussitôt que l'ensemble commence à basculer après avoir quitté sa surface d'appui.

Comme on le comprend, l'invention opère à la manière de la fonction logique "OU". En effet, ou bien on peut faire coulisser les deux organes l'un par rapport à l'autre mais on ne peut pas les faire basculer dans leur ensemble sauf pour une position longitudinale relative unique, par exemple la position "tout à l'avant", ou bien on peut faire basculer dans leur ensemble les deux organes mais on ne peut pas les faire coulisser l'un par rapport à l'autre sauf pour une position angulaire unique : la position d'appui. La première interdiction est obtenue par l'interverrouillage des deux parties à profils conjugués de la sécurité et la seconde interdiction par la mise en prise de la butée et de l'arrêtoir du dispositif.

Ce qui précède met bien en lumière les particularités distinctives de l'invention, montre son intérêt et fait bien ressortir les avantages qu'elle apporte.

## Revendications

1. Siège (10) du type réglable et basculable, destiné à être monté sur le plancher (20) d'un véhicule automobile terrestre, comprenant
une assise (11) réglable en translation selon une direction parallèle à l'axe longitudinal (X) du véhicule avec une course limitée par deux positions d'extrémités et basculable en rotation selon une direction (Y) orthogonale à cet axe longitudinal (X),
un dossier (12) porté par l'assise (11) et rabattable sur cette dernière par rotation selon une direction orthogonale à cet axe longitudinal (X),
au moins un montage (30) avec, d'une part, une glissière (31) permettant cette translation et faite d'un élément (311) mobile solidaire de l'assise (11) et d'un élément (312) semi-fixe coopérant avec l'élément mobile (311) et destiné à être relié au plancher (20) et avec, d'autre part, une articulation (32) permettant ce basculement et reliant cet élément semi-fixe (312) au plancher (20),
un verrou (40) pour maintenir normalement immobilisés relativement l'un à l'autre les éléments (311, 312) de la glissière (31) sous l'action d'une sollicitation élastique,
une serrure (50) pour normalement interdire ce basculement, qui est faite d'une gâche (51) solidaire du plancher (20) et d'un péne (52) articulé coopérant avec cette gâche (51) pour s'y fixer automatiquement sous l'action d'une sollicitation élastique et qui sert à l'ancrage d'au moins une boucle de ceinture de sécurité pour son amarrage au plancher (20),
une commande (60) pour agir sur ces verrou (40) et serrure (50) à l'encontre de leurs sollicitations élastiques particulières afin de permettre à volonté ces translation et/ou basculement, et
un dispositif de sûreté (80) suppléant temporairement le verrou (40) auquel il se substitue momentanément, ce dispositif de sûreté (80) comprenant, d'une part, un corps (81), porté par l'assise (11), délimitant un logement (810) pour une pince (811) et pour un taquet (812) mobile entre une première position active où il immobilise et condamne la glissière (31), lorsque le siège (10) occupe l'une des extrémités de sa course de translation, et une seconde position inactive où il laisse libre la glissière (31), lorsque le siège (10) n'occupe pas cette extrémité de sa translation, et d'autre part, un pontet (82), porté par le plancher (20), destiné à coopérer avec cette pince (811) et ce taquet (812).

2. Siège selon la revendication 1, dans lequel le taquet (812) est un levier monté basculant sur une goupille (813) et soumis au couple d'un ressort (814) pour occuper normalement sa position active.

3. Siège selon la revendication 1 ou 2, dans lequel le taquet (812) comprend un palpeur (8121) destiné à coopérer avec le pontet (82) et une butée (8122) destinée à coopérer avec un arrêtoir (83) solidaire de l'assise (11).

4. Siège selon la revendication 3, dans lequel l'arrêtoir (83) est monté directement ou indirectement sur l'assise (11).

5. Siège selon la revendication 4, dans lequel l'arrêtoir (83) est monté sur la glissière (31).

6. Siège selon la revendication 4 ou 5, dans lequel l'arrêtoir (83) est solidaire de l'élément mobile (311) de la glissière (31).

7. Siège selon l'une quelconque des revendications 1 à 6, dans lequel le corps (81) est muni d'une patte de fixation (801) destinée à coopérer avec l'élément semi-fixe (312) de la glissière (31).

8. Siège selon l'une quelconque des revendications 1 à 7, dans lequel la pince (811) présente deux branches (8110) élastiques en forme de lyre destinées à chevaucher le pontet (82) lorsque le siège occupe une position où le dispositif de sûreté (80) laisse libre la glissière (31).

9. Siège selon l'une quelconque des revendications 1 à 8, comprenant une sécurité (70) faite de deux parties (71, 72) coopérantes à profils conjugués l'une (71) mobile solidaire de l'assise (11) et l'autre (72) fixe solidaire du plancher (20) et agencées pour autoriser seulement lorsque le siège (10) est à cette extrémité de sa course de translation soit le basculement du siège (10) dans un sens après séparation du pêne (52) d'avec la gâche (51) soit la fixation du pêne (52) à la gâche (51) après basculement du siège (10) dans le sens opposé.

10. Siège selon la revendication 9, dans lequel la sécurité (70) comprend une partie mobile (71) à profil en J et une partie fixe (72) à profil en J inversé.

11. Siège selon la revendication 10, dans lequel la partie mobile (71) est solidaire de l'élément mobile (311) de la glissière (31) et la partie fixe (72) est solidaire du plancher (20).

12. Siège selon la revendication 10 ou 11, dans lequel le pontet (82) est monté sur une platine (820) comprenant la partie fixe (72).

13. Siège selon l'une quelconque des revendications 1 à 12, dans lequel l'extrémité de la course de translation est celle située la plus à l'avant.

14. Application d'un siège selon l'une quelconque des revendications 1 à 13 pour un siège arrière mono ou multiplace.

## Claims

1. Seat (10) of the adjustable and tiltable type, intended to be mounted on the floor (20) of a terrestrial automobile, comprising
a seat portion (11) which is adjustable in a translational direction in a direction parallel to the longitudinal axis (X) of the vehicle, with a travel limited by two extreme positions, and rotationally tiltable in a direction (Y) orthogonal to said longitudinal axis (X),
a back portion (12) supported by the seat portion (11) and hinged to fold down rotationally on to the latter in a direction orthogonal to said longitudinal axis (X),
at least one assembly (30) with, on the one hand, a slide (31) enabling said translational movement and made up of a mobile member (311) integral with the seat portion (11) and of a semi-fixed member (312) co-operating with the mobile member (311), and intended to be connected to the floor (20) and with, on the other hand, a joint (32) enabling this tilting movement and connecting said semi-fixed member (312) to the floor (20),
a bolt (40) for keeping the members (311, 312) of the slide (31) immobile relative to one another under normal conditions, under the action of a resilient bias,
a lock (50) for preventing this tilting movement under normal conditions, and being made up of a keeper (51) integral with the floor (20) and of a bolt (52) articulated to co-operate with said keeper (51), in order to be automatically fixed in that position under the effect of a resilient bias, and which serves to anchor at least one safety-belt buckle, mooring it to the floor (20),
a control means (60) for acting on the said bolt (40) and lock (50) against their respective resilient bias, enabling the translational and tilting movements to be carried out at will, and
a safety device (80) temporarily supplementing the bolt (40) for which it forms a temporary substitute, said safety device (80) comprising on the one hand a body (81) supported by the seat portion (11), defining a housing (810) for a pincer (811) and for a catch (812) movable between a first operative position in which it immobilises the slide (31) and, when the seat (10) occupies one of the extreme positions of its translational movement, securing said slide (31) in a second, inoperative position in which it leaves the slide (31) free, when the seat (10) does not occupy this extreme translational position, and on the other hand by a yoke (82) supported by the floor (20), intended to co-operate with said pincer (811) and said catch (812).

2. Seat according to claim 1, in which the catch (812) is a lever tiltably mounted on a pin (813) and subjected to the force of a spring (814) in order normally to occupy its inoperative position.

3. Seat according to claim 1 or 2, in which the catch (812) comprises a feeler (8121) intended to co-operate with the yoke (82) and a stop (8122) intended to co-operate with a stopper (83) integral with the seat (11).

4. Seat according to claim 3, in which the stopper (83) is mounted directly or indirectly on the seat (11).

5. Seat according to claim 4, in which the stopper (83) is mounted on the slide (31).

6. Seat according to claim 4 or 5, in which the stopper (83) is integral with the mobile member (311) of the slide (31).

7. Seat according to any one of claims 1 to 6, in which the body (81) is equipped with a securing tab (801) intended to co-operate with the semi-fixed member (312) of the slide (31).

8. Seat according to any one of claims 1 to 7, in which the pincer (811) has two resilient lyre-shaped branches (8110) intended to bridge over the yoke (82) when the seat occupies a position in which the safety device (80) leaves the slide (31) free.

9. Seat according to any one of claims 1 to 8, comprising a security element (70) made up of two co-operating portions (71,72) with connecting profiles, one (71) mobile and integral with the seat (11) and the other (72) fixed and integral with the floor (20), and set up to permit either tilting of the seat (10) in one direction after separation of the bolt (52) from the keeper (51), or fixing of the bolt (52) to the keeper (51) after tilting of the seat (10) in the opposite direction, only when the seat (10) is at this end of its translational travel.

10. Seat according to claim 9, in which the security element (70) comprises a mobile portion (71) with a 'J' profile, and a fixed portion (72) with an inverted 'J' profile.

11. Seat according to claim 10, in which the mobile portion (71) is integral with the mobile member (311) of the slide (31), and the fixed portion (72) is integral with the floor (20).

12. Seat according to claim 10 or 11, in which the yoke (82) is mounted on a plate (820) comprising the fixed portion (72).

13. Seat according to any one of claims 1 to 12, in which the end of the translational travel is that situated furthest forward.

14. Application of a seat according to any one of claims 1 to 13 for a rear single- or multiple-place seat.

## Patentansprüche

1. Verstellbarer und kippbarer Fahrzeugsitz (10), welcher auf dem Fahrzeugboden (20) eines Straßenfahrzeugs montiert wird und folgendes aufweist:
eine Sitzfläche (11), welche parallel zur Längsachse (X) des Fahrzeugs über eine Länge verschiebbar ist, die durch zwei Endpositionen begrenzt wird, und die drehbeweglich in einer Richtung (Y) gekippt werden kann, welche senkrecht zu dieser Längsachse (X) verläuft;
eine Rückenlehne (12), welche von der Sitzfläche (11) getragen wird und auf diese durch Drehung in senkrechter Richtung zu der Längsachse (X) heruntergeklappt werden kann;
mindestens eine Befestigung (30), die einerseits eine Laufschiene (31) aufweist, welche diese Verschiebung ermöglicht und aus einem beweglichen Element (311) besteht, das fest mit der Sitzfläche (11) verbunden ist, sowie aus einem halbfesten Element (312), das mit dem beweglichen Element (311) zusammenwirkt und an dem Fahrzeugboden (20) befestigt ist, und andererseits ein Gelenk (32) enthält, welches diese Kippbewegung ermöglicht und dieses halbfeste Element (312) mit dem Fahrzeugboden (20) verbindet;
eine Verriegelung (40), um normalerweise die Elemente (311, 312) der Laufschiene (31) elastisch miteinander zu verriegeln;
einen Verschluß (50), um normalerweise diese Kippbewegung zu unterbinden, und der aus einem fest mit dem Fahrzeugboden (20) verbundenen Schließhaken (51) und einem gelenkigen Schnapper (52) besteht, welcher mit diesem Schließhaken (51) zusammenwirkt und unter elastischer Einwirkung automatisch in diesen einhakt, und der für die Verankerung von mindestens einem Sicherheitsgurt für dessen Anbringung am Fahrzeugboden (20) dient;
eine Betätigung (60) für die Verriegelung (40) und den Verschluß (50) entgegen ihrer jeweiligen elastischen Beanspruchungen, um wahlweise diese Verschiebung oder Kippbewegung zu ermöglichen; und
eine Sicherheitsvorrichtung (80), welche zeitweilig die Verriegelung (40) unterstützt und vorübergehend ersetzt, wobei diese Sicherheitsvorrichtung (80) einerseits einen von der Sitzfläche (11) getragenen Körper (81) aufweist, welcher eine Aufnahme (810) für einen Haken (811) und eine Nase (812) bildet, die zwischen einer ersten aktiven Position, in der sie die Laufschiene (31) festlegt und ausschaltet, wenn sich der Fahrzeugsitz (10) in einer der Endstellungen seiner Verschiebung befindet, und einer zweiten inaktiven Position beweglich ist, in der die Laufschiene (31) freigesetzt wird, wenn der Fahrzeugsitz (10) sich nicht der Endstellung seiner Verschiebung befindet, und andererseits eine von dem Fahrzeugboden (20) getragene Kulisse (82) enthält, welche mit dieser Klemme (811) und dieser Nase (812) zusammenwirkt.

2. Fahrzeugsitz nach Anspruch 1,
**dadurch gekennzeichnet**, **daß**
die Nase (812) ein Hebel ist, welcher kippbeweglich an einem Zapfen (813) befestigt ist und der Kraft einer Feder (814) unterzogen wird, um normalerweise die aktive Position einzunehmen.

3. Fahrzeugsitz nach einem der Ansprüche 1 oder 2,
**dadurch gekennzeichnet**, **daß**
die Nase (812) einen Fühler (8121) aufweist, der mit der Kulisse (82) und einem Anschlag (8122) zusammenwirkt, der mit einer Arretierung (83) verbunden ist, die fest an dem Fahrzeugsitz (11) angebracht ist.

4. Fahrzeugsitz nach Anspruch 3,
**dadurch gekennzeichnet**, **daß**
diese Arretierung (83) direkt oder indirekt an dem Fahrzeugsitz (11) montiert ist.

5. Fahrzeugsitz nach Anspruch 4,
**dadurch gekennzeichnet**, **daß**
die Arretierung (83) an der Laufschiene (31) montiert ist.

6. Fahrzeugsitz nach einem der Ansprüche 4 oder 5,
**dadurch gekennzeichnet**, **daß**
die Arretierung (83) fest mit dem beweglichen Teil (311) der Laufschiene (31) verbunden ist.

7. Fahrzeugsitz nach einem der Ansprüche 1 bis 6,
**dadurch gekennzeichnet**, **daß**
der Körper (81) mit einer Befestigungsklaue (801) ausgestattet ist, welche mit dem halbfesten Element (312) der Laufschiene (31) zusammenwirkt.

8. Fahrzeugsitz nach einem der Ansprüche 1 bis 7,
**dadurch gekennzeichnet**, **daß**
die Klemme (811) zwei scherenförmige elastische Schenkel (8110) aufweist, welche die Kulisse (82) überlappen, wenn der Fahrzeugsitz eine Position einnimmt, in der die Sicherheitsvorrichtung (80) die Laufschiene freigibt.

9. Fahrzeugsitz nach einem der Ansprüche 1 bis 8,
**dadurch gekennzeichnet**, **daß**
er eine aus zwei Teilen (71, 72) mit sich ergänzenden Profilen bestehende Sicherung (70) aufweist, wobei der eine bewegliche Teil (71) mit der Sitzfläche (11) verbunden ist, während der andere feste Teil (72) am Fahrzeugboden (20) befestigt ist, und die so angeordnet sind, daß sie nur wenn sich der Fahrzeugsitz (10) am Endpunkt seiner Verschiebung befindet, entweder die Kippbewegung des Fahrzeugsitzes (10) in eine Richtung nach Lösen des Schnappers (52) von dem Schließhaken (51) zuläßt, oder das Einrasten des Schnappers (52) in den Schließhaken (51) nach dem Kippen des Fahrzeugsitzes (10) in die entgegengesetzte Richtung ermöglicht.

10. Fahrzeugsitz nach Anspruch 9,
**dadurch gekennzeichnet**, **daß**
die Sicherung (70) einen J-förmigen beweglichen Teil (71), sowie einen festen Teil (72) in der Form eines umgekehrten J aufweist.

11. Fahrzeugsitz nach Anspruch 10,
**dadurch gekennzeichnet**, **daß**
der bewegliche Teil (71) mit dem beweglichen Teil (311) der Laufschiene (31) fest verbunden ist, während der feste Teil (72) am Fahrzeugboden (20) befestigt ist.

12. Fahrzeugsitz nach einem der Ansprüche 10 oder 11,
**dadurch gekennzeichnet**, **daß**
die Kulisse (82) auf einer Tragplatte (820) montiert ist, die den festen Teil (72) enthält.

13. Fahrzeugsitz nach einem der Ansprüche 1 bis 12,
**dadurch gekennzeichnet**, **daß**
der Endpunkt der Verschiebung derjenige ist, welcher ganz vorne liegt.

14. Verwendung eines Fahrzeugsitzes nach einem der Ansprüche 1 bis 13 als einsitziger oder mehrsitziger Rücksitz in einem Kraftfahrzeug.
